(19) Europäisches Patentamt
European Patent Office
Office européen des brevets

(11) EP 2 269 880 B1

(12) EUROPÄISCHE PATENTSCHRIFT

(45) Veröffentlichungstag und Bekanntmachung des Hinweises auf die Patenterteilung:
**29.07.2015 Patentblatt 2015/31**

(51) Int Cl.:
**B60T 8/17** *(2006.01)* **B60T 13/08** *(2006.01)*

(21) Anmeldenummer: **10006761.0**

(22) Anmeldetag: **30.06.2010**

(54) **Abbremsung einer Zugfahrzeug-Anhänger-Kombination**

Brake for a traction vehicle trailer combination

Frein d'une combinaison véhicule de traction-remorque

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **03.07.2009 DE 102009031851**

(43) Veröffentlichungstag der Anmeldung:
**05.01.2011 Patentblatt 2011/01**

(73) Patentinhaber: **Dipl. Ing. Tietjen GmbH**
**27333 Bücken (DE)**

(72) Erfinder: **Tietjen, Hauke**
**27333 Bücken (DE)**

(74) Vertreter: **Günther, Constantin et al**
**Gramm, Lins & Partner**
**Freundallee 13 a**
**30173 Hannover (DE)**

(56) Entgegenhaltungen:
WO-A1-2007/008150    DE-A1- 3 714 383
DE-U1- 20 101 915    DE-U1- 20 315 755
DE-U1-202004 006 324    DE-U1-202006 010 199

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 269 880 B1

**Beschreibung**

Die Erfindung betrifft ein Verfahren zur Abbremsung einer Zugfahrzeug-Anhänger-Kombination gemäß dem Anspruch 1 sowie eine Einrichtung zur Steuerung einer solchen Abbremsung gemäß dem Anspruch 10.

Aus der DE 20 2004 006 324 U1 geht eine Bremseinrichtung für einen Fahrzeuganhänger hervor, bei der über einen Sensor Schleuderbewegungen des Anhängers erfasst werden. Aus der WO 2007/008150 A1 geht ein System und ein Verfahren zum Stabilisieren einer Fahrzeugkombination hervor.

In den letzten Jahren erlangen stufenlose Getriebe mit hydrostatischmechanischer Leistungsverzweigung eine immer größere Verbreitung in landwirtschaftlichen Arbeitsmaschinen, z. B. in Traktoren. Mit diesen Getrieben ist es möglich, über die Betätigung eines Power-Control-Hebeis, des Gaspedals oder eines Joysticks die Getriebeübersetzung stufenlos und ohne Kraftschlussunterbrechung zu verändern. Bei verschiedenen Herstellern kann ein solcher Traktor damit mit dem Power-Control-Hebel, dem Gaspedal oder dem Joystick abgebremst werden. Somit ist ein effizientes Verzögern der Zugfahrzeug-Anhänger-Kombination allein durch Verstellung von Motorsolldrehzahl und Getriebeübersetzung möglich. Diese Möglichkeit beeinflusst auch das Bedienverhalten des Fahrers entsprechend, so dass aus Bequemlichkeit oft auf eine Betätigung der Betriebsbremse verzichtet wird.

Bei vom Fahrer ausgelösten Bremsungen mit Hand- oder Fußbremse erfolgt eine Bremsung über die Betriebsbremse. In diesem Fall bekommt der Anhänger ein Signal zum Auslösen der Bremsanlage. Anders ist dies, wenn der Fahrer beispielsweise nur den Power-Control-Hebel von der Stellung "Vorwärtsfahrt" in die Stellung "neutral" bringt bzw. vom Gaspedal geht oder den Joystick nach hinten zieht. Bei solchen Verzögerungen, hervorgerufen durch das Getriebe, bekommt der Anhänger kein Signal zur Betätigung der Bremsanlage.

Entsprechend wird auch das Bremslicht nicht eingeschaltet. Die hierbei entstehenden Verzögerungen können aber so stark sein, dass die Räder des Traktors auf Schotter zum Blockieren kommen können. Läuft der Anhänger zu stark auf das Zugfahrzeug auf, kann es zum Einknicken des Gesamtgespanns und zu gefährlichen Situationen im Straßenverkehr kommen. Zudem werden das Getriebe und der Motor durch ein solches Abbremsen relativ stark belastet, was wiederum zu erhöhtem Verschleiß und Schäden daran führen kann.

Ausgehend von dieser Problematik wird in der Dissertation "Grundlagen eines Traktorbremsmanagements", Marco Wiegandt, Shaker-Verlag Aachen 2004, erschienen in der Reihe Forschungsberichte des Instituts für Landmaschinen und Fluidtechnik der Technischen Universität Carolo-Wilhelmina zu Braunschweig, vorgeschlagen, die Betriebsbremse des Zugs automatisiert zu betätigen, so dass durch Abbremsung aller Achsen des Zugs die Fahrstabilität vergrößert wird.

Die dort vorgeschlagene Lösung erfordert es, dass ein Traktorbremsmanagement vorgesehen wird, das vollständig autark in die Betriebsbremsanlage einer Zugfahrzeug-Anhänger-Kombination eingreifen kann, was einen relativ hohen technischen Aufwand erfordert. Zudem ist eine erneute technische Abnahme und Zulassung des Zugfahrzeugs und des Anhängers notwendig.

Der Schubbetrieb kann auch bei Bergabfahrt mit konstanter Geschwindigkeit auftreten. Auch hierbei kann es vorkommen, dass der Anhänger eine unerwünscht starke Schubwirkung auf das Zugfahrzeug ausübt, ohne dass vom Fahrer eine Betätigung der Betriebsbremse für sinnvoll gehalten wird.

Der vorliegenden Erfindung liegt daher die Aufgabe zugrunde, die eingangs erläuterte Problematik eines stark auf ein Zugfahrzeug aufschiebenden Anhängers auf einfacher und kostengünstiger zu realisierende Weise zu lösen.

Diese Aufgabe wird durch die das Verfahren gemäß Anspruch 1 und die Einrichtung gemäß Anspruch 10 gelöst. Die Unteransprüche geben vorteilhafte Ausgestaltungen der Erfindung an.

Die Erfindung geht gegenüber dem eingangs erläuterten Stand der Technik den anderen Weg, automatisiert nur die Bremsanlage des Anhängers zu betätigen, und zwar bei unbetätigter Betriebsbremse des Zugfahrzeugs. Somit ist es dem Fahrer möglich, aus Komfortgründen weiterhin auf eine Betätigung des Bremspedals verzichten, zumindest so lange keine erhöhte Bremswirkung erforderlich ist. Das automatische Betätigen der Bremsanlage des Anhängers kann mit einem relativ geringen technischen Aufwand gelöst werden, indem z. B. als zusätzliche Elemente in dem Zugfahrzeug oder dem Anhänger ein elektronisches Steuergerät mit einer entsprechenden Programmierung sowie eine pneumatische Ventileinrichtung zur Bremsenbetätigung vorgesehen werden. Solche Elemente können in bereits vorhandenen, für den Straßenverkehr zugelassenen Zugfahrzeugen ohne weiteres nachgerüstet werden, da kein grundlegender Eingriff in die Bremsanlage erforderlich ist. Eine entsprechende technische Abnahme kann mit geringem Aufwand erfolgen. Die Erfindung kann daher gut als Nachrüstlösung für bereits beim Anwender in Betrieb befindliche Fahrzeuge genutzt werden. Durch die automatische Bremsung des Anhängers bei unbetätigter Betriebsbremse des Zugfahrzeugs wird zudem das Zugfahrzeug-Anhänger-Gespann gestreckt und somit in einen fahrdynamisch relativ stabilen und sicheren Zustand geführt. Insbesondere kann eine Überlastung der Kupplung zwischen Anhänger und Zugfahrzeug und ein Einknicken des Gesamtgespanns vermieden werden. Zudem werden die Komponenten des Antriebsstrangs, wie Motor und Getriebe, geschont.

Gemäß einer vorteilhaften Weiterbildung der Erfindung wird die Bremswirkung des Anhängers automatisch derart eingestellt, dass die Schubwirkung des Anhängers auf das Zugfahrzeug unterhalb eines vorbestimmten Maßes gehalten wird. Dies erlaubt, die automatische Bremswirkung des Anhängers dosiert einzusetzen. Beispielsweise kann die Bremswirkung des Anhängers bzw. der auf den Anhänger ausgegebene Bremsdruck in Abhängigkeit von der ermittelten Schubwirkung des Anhängers bestimmt werden.

Gemäß einer vorteilhaften Ausführungsform der Erfindung wird aus der Differenz oder dem Quotienten der Ist-Motordrehzahl des Zugfahrzeugs und einer vorgegebenen Soll-Motordrehzahl ein Maß für die Schubwirkung des Anhängers und/oder eine Kenngröße zur Erkennung des Aufschiebens des Anhängers auf das Zugfahrzeug bestimmt. Es hat sich gezeigt, dass ein Vergleich der Ist-Motordrehzahl mit der Soll-Motordrehzahl ein Indikator für die Schubwirkung des Anhängers und damit für die Kopplungskräfte in der Kupplung zwischen Zugfahrzeug und Anhänger ist Bei modernen Zugfahrzeugen mit einem CAN-Datenbus stehen die Größen Ist-Motordrehzahl und Soll-Motordrehzahl auch bereits auf dem Datenbus zur Verfügung, so dass deren Verwendung in dem erfindungsgemäßen Verfahren auf einfache Weise ermöglicht wird.

Gemäß einer vorteilhaften Ausführungsform der Erfindung wird aus der Differenz oder dem Quotienten eines ersten Drucksignals und eines zweiten Drucksignals, die über einen ersten Drucksensor und einem zweiten Drucksensor eines hydrostatischen Fahrantriebs des Zugfahrzeugs erfasst werden, ein Maß für die Schubwirkung des Anhängers und/oder eine Kenngröße zur Erkennung des Aufschiebens des Anhängers auf das Zugfahrzeug bestimmt. Auf diese Weise können vorteilhaft die Druckverhältnisse in hydrostatischen Fahrantrieben in die Steuerung der automatischen Betätigung der Bremsanlage des Anhängers einbezogen werden. Vorteilhaft können die Druckverhältnisse von hydrostatischen Fahrantrieben insbesondere von Feldhäckslern, Baumaschinen, Radladern oder Teleskopladern erfasst werden. Bei solchen Fahrzeugen mit hydrostatischem Fahrantrieb kann die Geschwindigkeit vom Fahrer durch einen Fahrhebel eingestellt werden. Wird über den Fahrhebel die Geschwindigkeit deutlich verzögert, ändern sich die Druckverhältnisse im hydrostatischen Fahrantrieb derart, dass der Differenzdruck zwischen einer Eingangsseite und einer Ausgangsseite eines hydrostatischen Antriebs sich deutlich verändert und ggf. das Vorzeichen wechselt. Dieses Druckverhältnis kann z.B. als Druckdifferenz oder Druckquotient der Drucksignale zweier Drucksensoren des hydrostatischen Fahrantriebs von einem Steuergerät erfasst werden. Das Steuergerät ist dann vorteilhaft durch Programmierung dazu eingerichtet, diese Druckverhältnisse mit einem Schwellwert zu vergleichen und bei entsprechendem Bedarf, d.h. bei einer vorbestimmten Schubwirkung des Anhängers, dessen Bremsen zu betätigen. Bei ausreichender Abbremsung des Anhängers ändern sich wiederum die Druckverhältnisse des hydrostatischen Fahrantriebs, so dass das Signal zum Bremsen des Anhängers beendet werden kann. Vorteilhaft ist für das Beenden der Betätigung der Bremsanlage des Anhängers ein zweiter, kleinerer Schwellwert vorgesehen, so dass eine gewisse Hysterese realisiert wird.

Grundsätzlich kann die Erfindung bei jeder Art von Zugfahrzeug verwendet werden, wie z. B. einem Lastkraftwagen. Gemäß einer vorteilhaften Weiterbildung der Erfindung ist das erfindungsgemäße Verfahren insbesondere für ein Zugfahrzeug vorgesehen, das eine selbstfahrende Arbeitsmaschine ist. Als selbstfahrende Arbeitsmaschinen kommen insbesondere landwirtschaftliche Maschinen wie Traktoren, Häcksler, Mähdrescher, Radlader und Teleskoplader in Betracht.

Gemäß einer vorteilhaften Weiterbildung der Erfindung wird eine Vorwärtsfahrt der Zugfahrzeug-Anhänger-Kombination erkannt. Die automatische Betätigung der Bremsanlage des Anhängers wird nur bei Vorwärtsfahrt ausgelöst. Hierdurch kann das erfindungsgemäße Verfahren hinsichtlich seiner Betriebssicherheit weiter verbessert werden.

Gemäß einer vorteilhaften Weiterbildung der Erfindung wird die Fahrgeschwindigkeit der Zugfahrzeug-Anhänger-Kombination überwacht. Die Stärke der Bremswirkung des Anhängers wird in Abhängigkeit von der Fahrgeschwindigkeit eingestellt. Vorteilhaft kann eine Zuordnung zwischen der Stärke der Bremswirkung und der Fahrzeuggeschwindigkeit über Wertepaare Geschwindigkeit/Bremsdruck erfolgen. Die Wertepaare können beispielsweise als Parameter in einer Speichereinheit des elektronischen Steuergeräts abgelegt sein. Durch Anpassung der Parameter kann die Abbremsungscharakteristik für eine jeweilige Zugfahrzeug-Anhänger-Kombination eingestellt werden.

Gemäß einer vorteilhaften Weiterbildung der Erfindung wird während der automatischen Betätigung der Bremsanlage des Anhängers automatisch das Bremslicht am Zugfahrzeug und/oder am Anhänger eingeschaltet. Dies hat den Vorteil, dass nachfolgenden Verkehrsteilnehmern die Aktivierung der Bremsanlage und somit eine Verzögerung der Zugfahrzeug-Anhänger-Kombination angezeigt wird. Somit wird die Betriebssicherheit weiter verbessert.

Gemäß einer vorteilhaften Weiterbildung der Erfindung erfolgt die automatische Betätigung der Bremsanlage des Anhängers zeitlich begrenzt. Durch die zeitliche Begrenzung der Bremsbetätigung wird eine Überbeanspruchung der Bremsen, insbesondere der Radbremsen, vermieden. Insbesondere wird ein Überhitzen der Radbremsen vermieden. Die Bremsanlage des Anhängers wird geschont.

Gemäß einer vorteilhaften Weiterbildung der Erfindung wird nach Erreichen einer zeitlichen Begrenzung der automatischen Betätigung der Bremsanlage des Anhängers während einer vorbestimmten Wartezeit keine erneute automatische Betätigung der Bremsanlage des Anhängers vorgenommen. Hierdurch wird eine Sperrzeit festgelegt, die nach einer Phase der automatischen Betätigung der Bremsanlage des Anhängers dieser Bremsanlage eine gewisse Ruhephase ermöglicht. Durch geeignete Abstimmung der zeitlichen Begrenzung der automatischen Betätigung der Bremsanlage des Anhängers und der Sperrzeit kann eine auf die jeweilige Bremsanlage des Anhängers abgestimmte Bremsenschonung ermöglicht werden.

Gemäß einer vorteilhaften Weiterbildung der Erfindung wird ein Stillstands-Zustand der Zugfahrzeug-Anhänger-Kombination erkannt und während des Vorliegens des Stillstands-Zustands die Bremsanlage des Anhängers bei unbetätigter Betriebsbremse automatisch zur Erzeugung einer Bremswirkung des Anhängers betätigt. Hierdurch kann die Funktion einer Stillstandsbremse realisiert werden, die entsprechend einer automatischen Feststellbremse wirkt, jedoch nur auf die Bremsanlage des Anhängers wirkend. Sobald der Stillstand der Zugfahrzeug-Anhänger-Kombination erkannt wird, erfolgt eine Bremsung des Anhängers. Sobald das Zugfahrzeug sich wieder bewegt oder bewegt werden soll, wird die Bremse automatisch gelöst. Dies hat den Vorteil, dass ein unerwünschtes Wegrollen der Zugfahrzeug-Anhänger-Kombination im Stillstand vermieden wird, etwa wenn der Fahrer ohne Betätigung der eigentlichen Feststellbremse das Zugfahrzeug verlässt. Der Stillstands-Zustand der Zugfahrzeug-Anhänger-Kombination kann z.B. erkannt werden, indem ein Fahrzeug-Geschwindigkeitssignal ausgewertet wird. Bei Unterschreiten einer Schwelle, z.B. 1 km/h, wird dann der Stillstands-Zustand erkannt.

Gemäß einer vorteilhaften Weiterbildung einer Einrichtung zur Steuerung einer automatischen Betätigung der Bremsanlage eines Anhängers ist als Ausgabemittel zur Betätigung der Bremsanlage des Anhängers ein Druckluft-Relaisventil mit im Wesentlichen proportionaler Strom-/Druck-Charakteristik vorgesehen. Solche Ventile sind relativ kostengünstig erhältlich Durch die proportionale Charakteristik ist eine feinfühlige Steuerung der Bremswirkung des Anhängers möglich.

Gemäß einer vorteilhaften Weiterbildung der Erfindung ist das Relaisventil mit einem Anhängerbremsventil des Anhängers verbunden. Hierdurch ist eine Einkopplung des von der erfindungsgemäßen Einrichtung ausgelösten Bremsdrucks für den Anhänger mit wenig Aufwand in die Anhängerbremsanlage möglich. Die Einkopplung kann beispielsweise parallel zur Bremsleitung des Zugfahrzeugs über ein Doppelrückschlagsventil erfolgen. Insgesamt wird hierdurch eine einfache Nachrüstbarkeit der erfindungsgemäßen Einrichtung ermöglicht.

Gemäß einer vorteilhaften Weiterbildung der Erfindung weist das Steuergerät eine Speichereinheit zur Speicherung von Einstellparametern der automatischen Betätigung der Bremsanlage des Anhängers auf. Eine Speicherung von Einstellparametern ermöglicht es, über eine entsprechende Anpassung der Einstellparameter die Einrichtung für eine Vielzahl von verschiedenen Zugfahrzeugen und Anhängern anzupassen. Hierdurch werden Änderungen der eigentlichen Steuersoftware vermieden.

Die Erfindung wird nachfolgend anhand von Ausführungsbeispielen unter Verwendung von Zeichnungen näher erläutert.

Es zeigen

Fig. 1 -    die für die Erfindung relevanten Elemente eines Zugfahrzeugs und eines Anhängers in schematischer Darstellung und

Fig. 2 -    ein Steuergerät zur Ausführung der Erfindung mit weiteren Einzelheiten und

Fig. 3 -    ein Zeitdiagramm während einer Ausführung des erfindungsgemäßen Verfahrens.

In den Figuren werden gleiche Bezugszeichen für einander entsprechende Elemente verwendet.

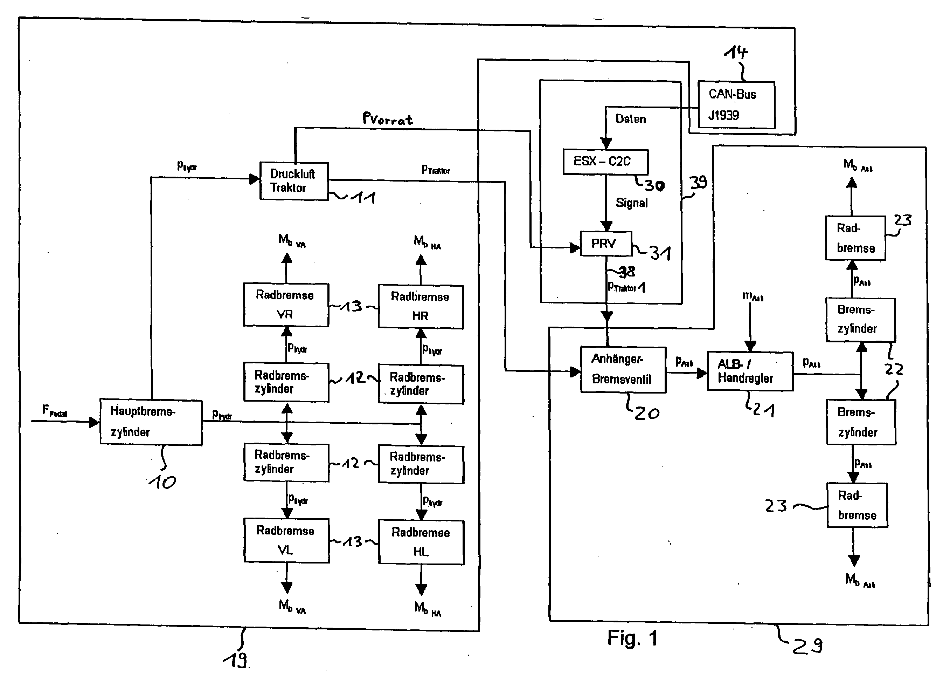

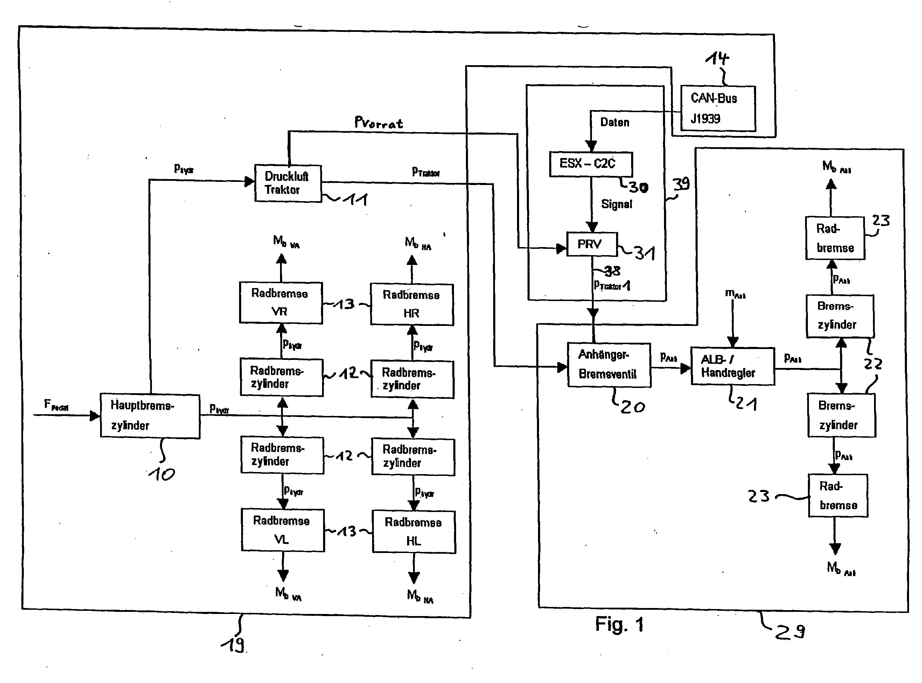

Die in der Fig. 1 dargestellten, für die Erläuterung der Erfindung relevanten Komponenten der Bremsanlage eines Zugfahrzeugs 19 weisen einen Hauptbremszylinder 10, Radbremszylinder 12 und Radbremsen 13 auf. Die vorgenannten Elemente sind Teile einer hydraulischen Bremsanlage des Zugfahrzeugs 19. Der Hauptbremszylinder 10 ist mit einem Fußbremspedal verbunden, über das der Fahrer eine Betätigung der Betriebsbremse, d. h. der Radbremszylinder 12 und der Radbremsen 13, auslösen kann. Der Hauptbremszylinder 10 setzt die Bremspedalbetätigung in einen hydraulischen Bremsdruck um, der den Radbremszylindern 12 zugeführt wird. Diese betätigen dann mechanisch die Radbremsen, die beispielsweise als Scheiben- oder Trommelbremse ausgeführt sein können. Gemäß Fig. 1 wird von einem mit zwei bremsbaren Achsen versehenen Zugfahrzeug 19 ausgegangen.

Die Bremsanlage des Zugfahrzeugs 19 weist des Weiteren einen Hydraulik/Pneumatik-Wandler 11 auf. Der Hydraulik/Pneumatik-Wandler 11 ist eingangsseitig über eine Leitung mit dem Hauptbremszylinder 10 verbunden und erhält über diese Leitung den von dem Hauptbremszylinder 10 erzeugten hydraulischen Bremsdruck. Der Hydraulik/Pneumatik-Wandler 11 weist eine Drucklufterzeugungs- und Speicherungseinrichtung auf, beispielsweise mit einem Kompressor und einem Druckluftvorratsbehälter. Zudem weist der Hydraulik/Pneumatik-Wandler einen Konverter auf, z. B. mit einem hydraulisch betätigten pneumatischen Relaisventil, durch den der am Eingang anstehende Hydraulik-Druck in einen proportionalen Pneumatik-Druck am Ausgang gewandelt wird. Der am Ausgang anstehende Pneumatik-Druck wird dann einem Anhängerbremsventil 20 des Anhängers 29 zugeführt. Der Hydraulik/Pneumatik-Wandler weist zusätzlich einen Anschluss auf, an dem der pneumatische Vorratsdruck zur Verfügung steht und an dem Druckluft für zusätzliche Zwecke entnommen werden kann, z. B. zur Reifenbefüllung.

Das Zugfahrzeug 19 weist außerdem einen CAN-Datenbus 14 auf, auf dem Daten zwischen verschiedenen elektronischen Einrichtungen in dem Zugfahrzeug 19 ausgetauscht werden. An dem CAN-Datenbus ist beispielsweise die elektronische Steuereinrichtung des Antriebsmotors des Zugfahrzeugs 19 angeschlossen. Diese elektronische Steuereinrichtung des Antriebsmotors gibt unter anderem Informationen über die Ist-Motordrehzahl und die Soll-Motordrehzahl des Zugfahrzeugs auf dem Datenbus aus.

Die Bremsanlage des Anhängers 29 weist ein Anhängerbremsventil 20 auf, das mit dem vom Zugfahrzeug ausgegebenen pneumatischen Betriebsbremsdruck $p_{Traktor}$ verbunden ist. Das Anhängerbremsventil 20 gibt den empfangenen Betriebsbremsdruck $p_{Traktor}$ weiter an einen ALB-/Handregler 21, der zur lastabhängigen Beeinflussung des weitergegebenen Bremsdrucks vorgesehen ist. Beispielsweise wird bei geringer Beladung des Anhängers ein geringerer Bremsdruck von dem ALB-/Handregler 21 ausgegeben als bei höherer Beladung. Der von dem ALB-/Handregler 21 ausgegebene Bremsdruck wird an Bremszylinder 22 einer bremsbaren Achse des Anhängers 29 ausgegeben. Die Bremszylinder betätigen mechanisch Radbremsen 23 des Anhängers 29.

Weiterhin ist eine Einheit 39 vorgesehen, die beispielsweise als kompaktes Modul ausgeführt sein kann. Die Einheit 39 ist an dem Zugfahrzeug 19 angebracht. Die Einheit 39 weist ein elektronisches Steuergerät 30 auf, das über einen Schnittstellenanschluss Daten von dem CAN-Datenbus 14 empfängt. Das Steuergerät 30 weist einen Ausgang auf, über den ein Betätigungssignal an ein Proportional-Relaisventil 31 ausgegeben wird. Das Signal kann beispielsweise als pulsbreitenmoduliertes Spannungssignal ausgegeben werden. Das Proportional-Relaisventil 31 weist einen Druckluftversorgungsanschluss auf, der mit dem Vorratsanschluss des Hydraulik/Pneumatik-Wandlers 11 verbunden ist. Hierüber erhält das Proportional-Relaisventil 31 als Eingangsdruck den Vorratsdruck $p_{vorrat}$ des Zugfahrzeugs. Aus dem von dem Steuergerät 30 kommenden elektrischen Signal und dem Vorratsdruck $p_{vorrat}$ erzeugt das Proportional-Relaisventil einen der Pulsbreite des Eingangssignals im Wesentlichen proportionales ausgangsseitiges pneumatisches Drucksignal $p_{Traktor1}$ auf einer Druckausgabeleitung 38. Die Druckausgabeleitung 38 ist z. B. über ein Wechselventil bzw. ein Doppelrückschlagventil mit dem Anhängerbremsventil 20 verbunden. Der andere Anschluss des Doppelrückschlagventils ist mit dem Betriebsbremsdruck $p_{Ttraktor}$ des Zugfahrzeugs 19 verbunden. Hierüber kann die Einheit 39 nach Erkennung des Schubbetriebs des Anhängers 29 die Bremsanlage des Anhängers betätigen.

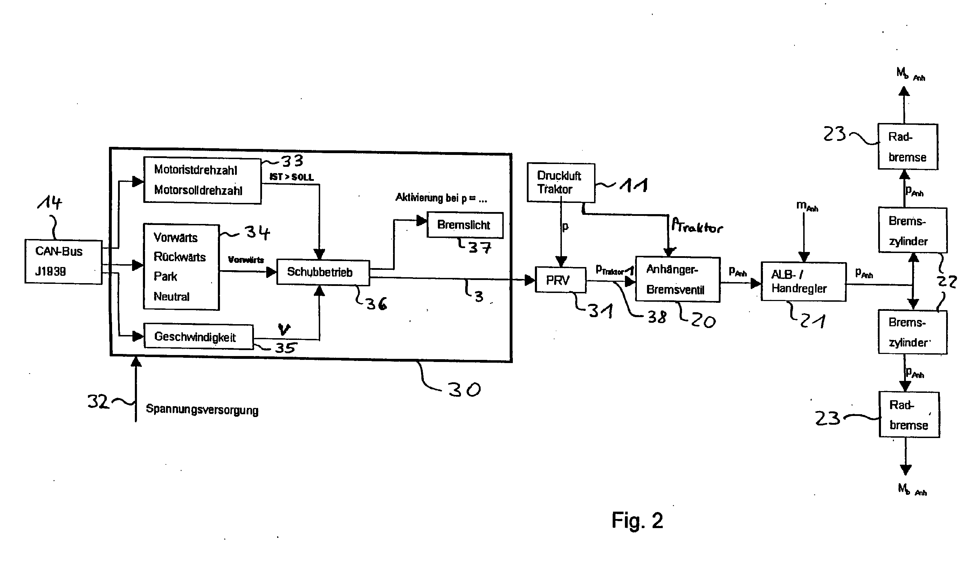

Die Fig. 2 zeigt ausschnittsweise einige Elemente der Fig. 1 sowie das Steuergerät 30 mit weiteren Details. Das Steuergerät 30 kann beispielsweise eine frei programmierbare Steuer- und Regelelektronik vom Typ ESX C2C der Fa. Sensor-Technik Wiedemann GmbH sein. Als Proportional-Relaisventil kommt beispielsweise das Ventil Nr. 480 202 000 0 der Fa. WABCO in Frage.

In dem Steuergerät 30 werden als Signale von dem CAN-Bus 14 die Ist-Motordrehzahl, die Soll-Motordrehzahl, die jeweilige Einstellung des Getriebewählhebels (Vorwärts, Rückwärts, Park, Neutral) und die Geschwindigkeit v des Fahrzeugs ausgewertet. In einem Block 33 wird die Ist-Motordrehzahl mit der Soll-Motordrehzahl verglichen. Sofern die Ist-Motordrehzahl größer ist als die Soll-Motordrehzahl, wird in einem Block 36 auf das Vorliegen eines Schubbetriebs des Anhängers geschlossen, sofern aufgrund der Getriebe-Information in einem Block 34 die Vorwärts-Fahrtrichtung erkannt wurde und aufgrund der Geschwindigkeitsinformation v in einem Block 35 das Vorliegen einer gewissen Mindestgeschwindigkeit erkannt wurde, d. h. wenn kein Stillstand des Fahrzeugs vorliegt. Wenn eine vorbestimmte Schubwirkung des Anhängers vorliegt, z. B. wenn die Differenz aus Ist-Motordrehzahl und Soll-Motordrehzahl größer als ein Schwellwert ist, aktiviert das Steuergerät 30 über einen Block 37 das Bremslicht. Außerdem gibt das Steuergerät 30 über einen Signalpfad 39 ein Signal, das in Folge entsprechender Elektronik-Ausstattung des Steuergeräts 30 als pulsbreitenmoduliertes Spannungssignal ausgegeben wird, an das Proportional-Relaisventil 31 aus. Hierbei bestimmt das Steuergerät 30 die Größe der Pulsbreite und damit den vom Proportional-Relaisventil 31 erzeugten ausgegebenen Druck $p_{Traktor1}$ in Abhängigkeit von der Fahrzeug-Geschwindigkeit v. Entsprechend wird hierdurch die Bremsanlage des Anhängers mit einer bestimmten Bremswirkung betätigt, ohne dass die Betriebsbremse des Zugfahrzeugs betätigt sein muss.

Das Steuergerät 30 weist zudem eine Speichereinheit zur Speicherung von Einstellparametern auf. Diese Parameter-Speichereinheit ist vorzugsweise als nicht-flüchtiger Speicher ausgelegt.

In der Parameter-Speichereinheit können beispielsweise folgende Parameter abgelegt werden.

| Parameter | Beschreibung | Wert |
|---|---|---|
| Parameter1 | Rampe für Delta-Drehzahl | 60 |
| Parameter2 | Anfangsdruck | 215 |
| Parameter3 | Bremsdruck $\leq$ V1 | 250 |
| Parameter4 | Bremsdruck > V1 | 325 |
| Parameter5 | Bremsdruck > V2 | 425 |
| Parameter6 | V1 [0,1 km/h] | 100 |
| Parameter7 | V2 [0,1 km/h] | 300 |

(fortgesetzt)

| Parameter | Beschreibung | Wert |
|---|---|---|
| Parameter8 | Zeit Bremse EIN [ms] | 1500 |
| Parameter9 | Zeit Bremse AUS [ms] | 2250 |
| Parameter10 | Druck für Bremslicht-Aktivierung | 275 |
| Parameter11 | Stillstandsbremse EIN (1) und AUS (0) | 0 |

Parameter 1: Rampe für die Delta-Drehzahl

Dieser Parameter beschreibt, mit welchem Zeitgradienten bei der automatischen Bremsbetätigung der Druck zur Anhängerbremse geleitet wird. Hierdurch kann die "Aggressivität" des Einsetzens der automatischen Bremsbetätigung auf einen jeweils sinnvollen Wert eingestellt werden.

Parameter 2: Anfangsdruck

Ansprechdruck des Proportional-Relaisventils 31.

Parameter 3: Bremsdruck ≤ V1

Pneumatischer Bremsdruck $p_{Traktor1}$ auf der Druckausgabeleitung 38, der bei einer Geschwindigkeit v unterhalb oder bis zum Wert V1 (hier unter 10 km/h) ausgesteuert wird.

Parameter 4: Bremsdruck > V1

Pneumatischer Bremsdruck $p_{Traktor1}$, der bei einer Geschwindigkeit oberhalb von V1 (hier über 10 km/h) ausgesteuert wird.

Parameter 5: Bremsdruck > V2

Pneumatischer Bremsdruck $p_{Traktor1}$, der bei einer Geschwindigkeit halb V2 (hier über 30 km/h) ausgesteuert wird.

Parameter 6: V1

Geschwindigkeit V1 für den Bremsdruck bei Parameter 3 und 4.

Parameter 7: V2

Geschwindigkeit V2 für den Bremsdruck bei Parameter 5.

Parameter 8: Zeit Bremse ein

Gibt die zeitliche Begrenzung der automatischen Betätigung der Bremsanlage des Anhängers an.

Parameter 9: Zeit Bremse aus

Gibt die Sperrzeit an, in der die automatische Betätigungsfunktion die Bremse zur Bremsenschonung nicht aktiviert.

Parameter 10: Druck für Bremslicht

Gibt einen Druck an, ab dem das Bremslicht am Traktor aktiviert wird.

Parameter 11: Stillstandsbremsung

Hier kann die Stillstandsbremsung aktiviert oder deaktiviert werden, d. h. die Anhängerbremse wird im Stillstand des Traktors ausgelöst oder nicht.

Bisher wurde die Erfindung an zwei verschiedenen landwirtschaftlichen Traktoren getestet, und zwar an einem MF Dyna-VT und einem Claas Xerion. Das Steuergerät 30 erkennt über den Parameter 11 des Parameterspeichers, welcher Traktor zu steuern ist.

Diese Unterscheidung ist erforderlich, weil die Traktoren unterschiedlich betrieben werden. Beim MF Dyna-VT wird über einen Joystick in Verbindung mit dem Getriebe dosiert verzögert. Der Claas Xerion kann im Prinzip wie ein PKW mit einem Automatikgetriebe betrieben werden. Es ist kein Joystick vorhanden, dementsprechend kann die Verzögerung nicht über den Fahrhebel oder den Joystick dosiert werden.

Der in der Fig. 2 in dem Steuergerät 30 dargestellte Steuerungsalgorithmus läuft in einer Endlosschleife mit permanenter Abfrage des CAN-Datenbusses ab.

Über die Getriebe-Information wird die Fahrtrichtung erkannt. Dies ist von Bedeutung, da die Druckluftbremse nur bei Vorwärtsfahrt automatisch betätigt werden soll.

Der Ablauf der Steuerung beim Claas Xerion ist wie folgt. Der Schubbetrieb wird durch einen Vergleich der Soll- und der Ist-Drehzahl des Motors erkannt. Sobald die Ist-Drehzahl höher ist als die Soll-Drehzahl, wird eine negative Differenz Delta gemäß der Gleichung

$$\text{Delta} = \text{Soll-Drehzahl} - \text{Ist-Drehzahl}$$

im Steuergerät 30 ausgewertet und die automatische Bremsung des Anhängers eingeleitet. Wenn also der Fahrer vom Gas geht, schiebt der Anhänger auf das Zugfahrzeug auf. Dies erkennt das Steuergerät 30 und löst eine Bremsung des Anhängers aus. Die Bremsung wird bei Vorwärtsfahrt ausgelöst. Durch eine vorgesehene Zeitüberwachung der automatischen Bremsung wird gewährleistet, dass kein Überhitzen der Anhängerbremsen auftritt. Sofern der Fahrer allerdings die Motordrehzahl konstant hält und nicht vollständig vom Gas geht, kann beispielsweise auch keine automatische Bremsung ausgelöst werden. Sofern der Fahrer während der Bremsung wieder Gas gibt, wird die automatische Bremsung des Anhängers deaktiviert. Im Ergebnis wird die automatische Bremsung des Anhängers zur Kompensation einer zu großen Schubwirkung des Anhängers aktiviert. Ein mit dem erfindungsgemäßen System vertrauter Fahrer kann bei vorausschauender Fahrweise weitgehend ohne Betätigung der Betriebsbremse die Zugfahrzeug-Anhänger-Kombination betreiben.

Beim Traktor vom Typ MF Dyna-VT ist der zuvor erläuterte Ablauf im Wesentlichen identisch. Zusätzlich können beim MF Dyna-VT Getriebedaten ausgewertet werden. Insgesamt ist aufgrund der Betätigbarkeit über den Joystick bzw. den Fahrhebel eine feinere Dosierung der Bremswirkung des Anhängers und damit der Verzögerung der Zugfahrzeug-Anhänger-Kombination möglich.

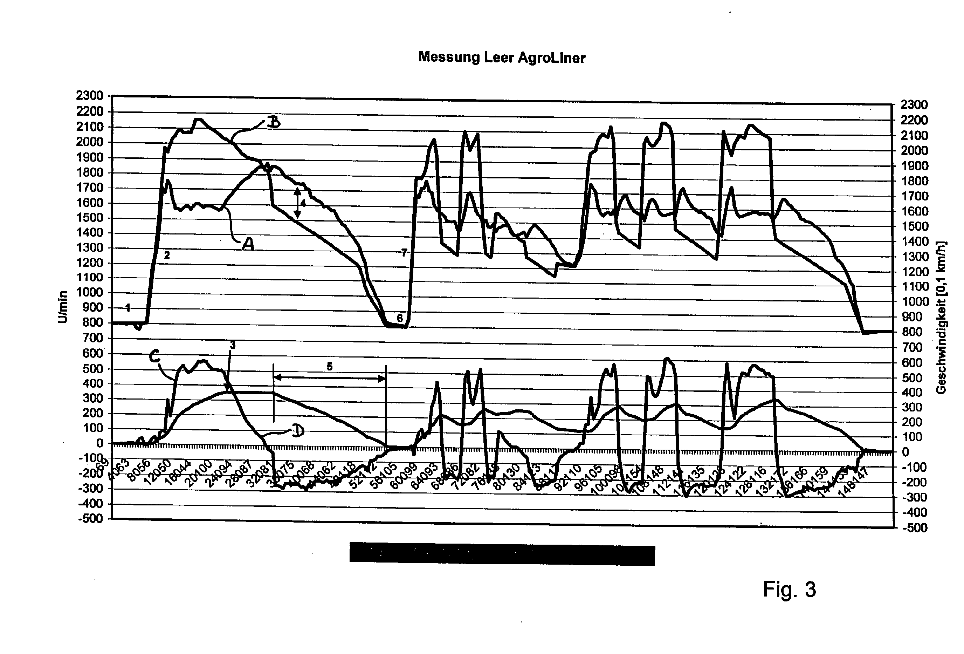

Die Fig. 3 zeigt ein Messdiagramm, das mit einem Zugfahrzeug und einem Anhänger unter Verwendung der Erfindung aufgenommen wurde. Als Anhänger wurde ein Agroliner ohne Beladung (leer) verwendet. In der Fig. 3 sind die Größen Ist-Motordrehzahl (EngineIst Kurve A) und Soll-Motordrehzahl (EngineSoll Kurve B) als Zeitverlauf im oberen Bereich des Diagramms dargestellt. Im unteren Bereich des Diagramms sind die Differenz (Delta Kurve C) aus der Ist-Motordrehzahl und der Soll-Motordrehzahl sowie die Fahrzeuggeschwindigkeit (Speed Kurve D) dargestellt. Zeitlich zu Beginn des Diagramms im Bereich 1 befindet sich Fahrzeug im Stillstand. Die Motordrehzahl liegt dort im Leerlaufbereich bei etwa 800 Umdrehungen pro Minute. Das Delta ist gleich Null, entsprechend wird die Anhängerbremsanlage durch das Steuergerät 30 nicht automatisch betätigt. Im Bereich 2 ist ein Drehzahlanstieg aufgrund einer Beschleunigung des Traktors erkennbar. In diesem Bereich liegt ein positives Delta vor, was ebenfalls nicht zu einer Auslösung der Bremsanlage des Anhängers führt. Ab dem Zeitpunkt 3 ist die Höchstgeschwindigkeit von 50 km/h erreicht. Auch in diesem Zeitbereich liegt ein positives Delta vor, entsprechend erfolgt keine Auslösung der Bremsanlage des Anhängers. In dem Bereich 4 wurde das Gas komplett weggenommen, d. h. das Gaspedal ist nicht betätigt. Entsprechend wird dann die Ist-Motordrehzahl größer als die Soll-Motordrehzahl, da der Anhänger auf das Zugfahrzeug aufschiebt. Der entsprechende Zeitbereich 5 des Schubbetriebs ist im unteren Bereich der Fig. 3 dargestellt. In dem Zeitbereich 5 erkennt das Steuergerät 30 durch Auswertung der Daten von dem CAN-Datenbus den Schubbetrieb und löst die Bremsanlage des Anhängers in gewissen Zeitintervallen, die durch die Parameter 8 und 9 festgelegt sind, bis zum Stillstand der Zugfahrzeug-Anhänger-Kombination zum Zeitpunkt 6 aus. Im Bereich 6 befindet sich das Gespann wieder im Stillstand, die Motordrehzahl liegt im Leerlaufbereich bei 800 Umdrehungen pro Minute. Im Bereich 7 erfolgt wieder ein Drehzahlanstieg in Folge eines Gasgebens durch den Fahrer, was wiederum zum Beschleunigen des Gespanns führt. In den nachfolgenden Zeitbereichen der Fig. 3 wurde während der Fahrt bei verschiedenen Geschwindigkeiten mehrfach Gas weggenommen, so dass der Anhänger in den Schubbetrieb übergeht, ein negatives Delta auftritt und augrund dessen die automatische Bremsung ausgelöst wird.

**Patentansprüche**

1.  Verfahren zur Abbremsung einer Zugfahrzeug-Anhänger-Kombination, wobei durch ein Steuergerät (30) in einem Fahrzustand mit unbetätigter Betriebsbremse (10) ein auf das Zugfahrzeug (19) aufschiebender Anhänger (29) erkannt wird und durch das Steuergerät (30) bei Erreichen oder Überschreiten einer vorbestimmten Schubwirkung des Anhängers (29) die Bremsanlage des Anhängers (29) bei unbetätigter Betriebsbremse (10) des Zugfahrzeugs (19) automatisch zur Erzeugung einer Bremswirkung des Anhängers (29) betätigt wird, wobei

    a) aus der Differenz oder dem Quotienten der Ist-Motordrehzahl des Zugfahrzeugs (19) und einer vorgegebenen Soll-Motordrehzahl und/oder
    b) aus der Differenz oder dem Quotienten eines ersten Drucksignals und eines zweiten Drucksignals, die über einen ersten Drucksensor und einem zweiten Drucksensor eines hydrostatischen Fahrantriebs des Zugfahrzeugs (19) erfasst werden,
    ein Maß für die Schubwirkung des Anhängers (29) und/oder eine Kenngröße zur Erkennung des Aufschiebens des Anhängers (29) auf das Zugfahrzeug (19) bestimmt wird.

2.  Verfahren nach Anspruch 1, **dadurch gekennzeichnet, dass** die Bremswirkung des Anhängers (29) automatisch derart eingestellt wird, dass die Schubwirkung des Anhängers (29) auf das Zugfahrzeug (19) unterhalb eines vorbestimmten Maßes gehalten wird.

3.  Verfahren nach wenigstens einem der vorhergehenden Ansprüche, **dadurch gekennzeichnet, dass** das Zugfahrzeug (19) eine selbstfahrende Arbeitsmaschine ist.

4.  Verfahren nach wenigstens einem der vorhergehenden Ansprüche, **dadurch gekennzeichnet, dass** eine Vorwärtsfahrt der Zugfahrzeug-Anhänger-Kombination erkannt wird und die automatische Betätigung der Bremsanlage des Anhängers (29) nur bei Vorwärtsfahrt ausgelöst wird.

5.  Verfahren nach wenigstens einem der vorhergehenden Ansprüche, **dadurch gekennzeichnet, dass** die Fahrgeschwindigkeit der Zugfahrzeug-Anhänger-Kombination überwacht wird und die Stärke der Bremswirkung des Anhängers (29) in Abhängigkeit von der Fahrgeschwindigkeit eingestellt wird.

6.  Verfahren nach wenigstens einem der vorhergehenden Ansprüche, **dadurch gekennzeichnet, dass** während der automatischen Betätigung der Bremsanlage des Anhängers (29) automatisch das Bremslicht am Zugfahrzeug (19) und/oder am Anhänger (29) eingeschaltet wird.

7.  Verfahren nach wenigstens einem der vorhergehenden Ansprüche, **dadurch gekennzeichnet, dass** die automatische Betätigung der Bremsanlage des Anhängers (29) zeitlich begrenzt erfolgt.

8.  Verfahren nach Anspruch 7, **dadurch gekennzeichnet, dass** nach Erreichen einer zeitlichen Begrenzung der automatischen Betätigung der Bremsanlage des Anhängers (29) während einer vorbestimmten Wartezeit keine erneute automatische Betätigung der Bremsanlage des Anhängers (29) erfolgt.

9.  Verfahren nach wenigstens einem der vorhergehenden Ansprüche, **dadurch gekennzeichnet, dass** ein Stillstands-Zustand der Zugfahrzeug-Anhänger-Kombination erkannt wird und während des vorliegenden Stillstands-Zustands die Bremsanlage des Anhängers (29) bei unbetätigter Betriebsbremse (10) automatisch zur Erzeugung einer Bremswirkung des Anhängers (29) betätigt wird.

10. Einrichtung zur Steuerung einer automatischen Betätigung der Bremsanlage eines Anhängers (29) einer Zugfahrzeug-Anhänger-Kombination, mit einem Steuergerät (30) mit Eingabemitteln (14), die zur Eingabe von Betriebsgrößen der Zugfahrzeug-Anhänger-Kombination eingerichtet sind, und mit Ausgabemitteln (31) zur Betätigung der Bremsanlage des Anhängers (29), wobei das Steuergerät (30) durch Programmierung dazu eingerichtet ist, aufgrund der über die Eingabemittel empfangenen Betriebsgrößen einen bei unbetätigter Betriebsbremse (10) auf das Zugfahrzeug (19) aufschiebenden Anhänger (29) zu erkennen und bei Erreichen oder Überschreiten einer vorbestimmten Schubwirkung des Anhängers (29) die Bremsanlage des Anhängers (29) bei unbetätigter Betriebsbremse (10) des Zugfahrzeugs (19) automatisch zur Erzeugung einer Bremswirkung des Anhängers (29) zu betätigen, wobei

a) aus der Differenz oder dem Quotienten der Ist-Motordrehzahl des Zugfahrzeugs (19) und einer vorgegebenen Soll-Motordrehzahl

und/oder

b) aus der Differenz oder dem Quotienten eines ersten Drucksignals und eines zweiten Drucksignals, die über einen ersten Drucksensor und einem zweiten Drucksensor eines hydrostatischen Fahrantriebs des Zugfahrzeugs (19) erfasst werden,

ein Maß für die Schubwirkung des Anhängers (29) und/oder eine Kenngröße zur Erkennung des Aufschiebens des Anhängers (29) auf das Zugfahrzeug (19) bestimmt ist.

11. Einrichtung nach Anspruch 10, **dadurch gekennzeichnet, dass** die Ausgabemittel (31) ein Druckluft-Relaisventil mit im Wesentlichen proportionaler Strom-/Druck-Charakteristik aufweisen.

12. Einrichtung nach Anspruch 11, **dadurch gekennzeichnet, dass** das Relaisventil (31) mit einem Anhängerbremsventil (20) des Anhängers (29) verbunden ist.

13. Einrichtung nach wenigstens einem der Ansprüche 10 bis 12, **dadurch gekennzeichnet, dass** das Steuergerät (30) eine Speichereinheit zur Speicherung von Einstellparametern der automatischen Betätigung der Bremsanlage des Anhängers (29) aufweist.

**Claims**

1. Method for braking a traction vehicle-trailer combination, wherein a trailer (29) which runs up onto the traction vehicle (19) is detected by a control device (30) in a driving state with a service brake (10) which is not actuated, and when a predetermined thrust effect of the trailer (29) is reached or exceeded the brake system of the trailer (29) is automatically actuated by the control device (30) to generate a braking effect of the trailer (29) when the service brake (10) of the traction vehicle (19) is not actuated, wherein a measure of the thrust effect of the trailer (29) and/or a characteristic variable for detecting the running up of the trailer (29) onto the traction vehicle (19) is determined

a) from the difference or the quotient of the actual engine rotational speed of the traction vehicle (19) and a predefined setpoint engine rotational speed

and/or

b) from the difference or the quotient of a first pressure signal and of a second pressure signal, which are sensed from a first pressure sensor and a second pressure sensor of a hydrostatic traction drive of the traction vehicle (19).

2. Method according to Claim 1, **characterized in that** the braking effect of the trailer (29) is set automatically in such a way that the thrust effect of the trailer (29) on the traction vehicle (19) is kept below a predetermined measure.

3. Method according to at least one of the preceding claims, **characterized in that** the traction vehicle (19) is a self-propelling working machine.

4. Method according to at least one of the preceding claims, **characterized in that** forward travel of the traction vehicle-trailer combination is detected and the automatic actuation of the brake system of the trailer (29) is triggered only in the case of forward travel.

5. Method according to at least one of the preceding claims, **characterized in that** the velocity of the traction vehicle-trailer combination is monitored and the strength of the braking effect of the trailer (29) is set as a function of the velocity.

6. Method according to at least one of the preceding claims, **characterized in that** during the automatic actuation of the brake system of the trailer (29) the brake light on the traction vehicle (19) and/or on the trailer (29) is switched on automatically.

7. Method according to at least one of the preceding claims, **characterized in that** the automatic actuation of the brake system of the trailer (29) is carried out in a chronologically limited fashion.

8. Method according to Claim 7, **characterized in that** after a chronological limitation of the automatic actuation of the brake system of the trailer (29) is reached, no renewed automatic activation of the brake system of the trailer (29) takes place during a predetermined waiting time.

9. Method according to at least one of the preceding claims, **characterized in that** a stationary state of the traction vehicle-trailer combination is detected, and during the stationary state which is present the brake system of the trailer (29) is actuated automatically to generate a braking effect of the trailer (29) when the service brake (10) is not actuated.

10. Device for controlling automatic actuation of the brake system of a trailer (29) of a traction vehicle-trailer combination, with a control device (30) with input means (14) which are configured to input operating variables of the traction vehicle-trailer combination, and with output means (31) for actuating the brake system of the trailer (29), wherein the control device (30) is configured, by programming, to detect, on the basis of the operating variables received via the input means, a trailer (29) which runs up onto the traction vehicle (19) when the service brake (10) is not actuated, and to actuate the brake system of the trailer (29) automatically when the service brake (10) of the traction vehicle (19) is not actuated, in order to generate a braking effect of the trailer (29), when a predetermined thrust effect of the trailer (29) is reached or exceeded,
wherein
a measure of the thrust effect of the trailer (29) and/or a characteristic variable for detecting the running up of the trailer (29) onto the traction vehicle (19) is determined

a) from the difference or the quotient of the actual engine rotational speed of the traction vehicle (19) and a predefined setpoint engine rotational speed
and/or
b) from the difference or the quotient of a first pressure signal and of a second pressure signal, which are sensed from a first pressure sensor and a second pressure sensor of a hydrostatic traction drive of the traction vehicle (19).

11. Device according to Claim 10, **characterized in that** the output means (31) have a compressed air relay valve with an essentially proportional current/pressure characteristic.

12. Device according to Claim 11, **characterized in that** the relay valve (31) is connected to a trailer brake valve (20) of the trailer (29).

13. Device according to at least one of Claims 10 to 12, **characterized in that** the control device (30) has a memory unit for storing setting parameters of the automatic actuation of the brake system of the trailer (29).


**Revendications**

1. Procédé de freinage d'une combinaison formée d'un véhicule tracteur et d'une remorque, dans lequel la poussée d'une remorque (29) sur le véhicule tracteur (19) dans une situation de roulage dans laquelle les freins de service (10) ne sont pas actionnés est détectée par un appareil de commande (30) et dans lequel lorsqu'un effet prédéterminé de poussée de la remorque (29) est atteint ou dépassé, l'appareil de commande (30) actionne automatiquement l'installation de freinage de la remorque (29) en vue d'exercer une action de freinage sur la remorque (29) sans que les freins de service (10) du véhicule tracteur (19) soient actionnés et dans lequel

a) à partir de la différence ou du quotient entre la vitesse effective de rotation du moteur du véhicule tracteur (19) et d'une vitesse de rotation prédéterminée de consigne du moteur et/ou
b) à partir de la différence ou du quotient d'un premier signal de pression et d'un deuxième signal de pression saisis par l'intermédiaire d'un premier détecteur de pression et d'un deuxième détecteur de pression d'un entraînement hydrostatique de roulage du véhicule tracteur (19),
une mesure de l'action de poussée de la remorque (29) et/ou une grandeur caractéristique qui permet de détecter que la remorque (29) exerce une poussée sur le véhicule tracteur (19) sont déterminées.

2. Procédé selon la revendication 1, **caractérisé en ce que** l'action de freinage de la remorque (29) est exercée de manière automatique de telle sorte que l'action de poussée de la remorque (29) sur le véhicule tracteur (19) soit maintenue en dessous d'une valeur prédéterminée.

**3.** Procédé selon au moins l'une des revendications précédentes, **caractérisé en ce que** le véhicule tracteur (19) est une machine de travail à roulage autonome.

**4.** Procédé selon au moins l'une des revendications précédentes, **caractérisé en ce qu'**un déplacement vers l'avant de la combinaison formée du véhicule tracteur et de la remorque est détecté et **en ce que** l'actionnement automatique de l'installation de freinage de la remorque (29) n'est déclenché que lors d'un déplacement vers l'avant.

**5.** Procédé selon au moins l'une des revendications précédentes, **caractérisé en ce que** la vitesse de roulage de la combinaison formée du véhicule tracteur et de la remorque est surveillée et **en ce que** l'intensité de l'action de freinage de la remorque (29) est établie en fonction de la vitesse de roulage.

**6.** Procédé selon au moins l'une des revendications précédentes, **caractérisé en ce que** pendant l'actionnement automatique de l'installation de freinage de la remorque (29), les feux stops du véhicule tracteur (19) et/ou de la remorque (29) sont branchés automatiquement.

**7.** Procédé selon au moins l'une des revendications précédentes, **caractérisé en ce que** l'actionnement automatique de l'installation de freinage de la remorque (29) a lieu pendant une durée limitée.

**8.** Procédé selon la revendication 7, **caractérisé en ce qu'**après que la durée limitée de l'actionnement automatique de l'installation de freinage (29) a été atteinte, aucun nouvel actionnement automatique de l'installation de freinage de la remorque (29) n'a lieu pendant une durée d'attente prédéterminée.

**9.** Procédé selon au moins l'une des revendications précédentes, **caractérisé en ce qu'**une situation d'arrêt de la combinaison formée du véhicule tracteur et de la remorque est détectée et **en ce que** pendant la situation d'arrêt, l'installation de freinage de la remorque (29) est actionnée automatiquement pour obtenir une action de freinage de la remorque (29) sans que le frein de service (10) soit actionné.

**10.** Dispositif de commande de l'actionnement automatique de l'installation de freinage d'une remorque (29) dans une combinaison formée d'un véhicule tracteur et d'une remorque, le dispositif présentant un appareil de commande (30) doté de moyens d'introduction (14) conçus pour introduire des grandeurs de service de la combinaison formée du véhicule tracteur et de la remorque et de moyens de sortie (31) qui actionnent l'installation de freinage de la remorque (29),
l'appareil de commande (30) étant conçu pour, par programmation, sur la base des grandeurs de fonctionnement reçues par l'intermédiaire des moyens d'introduction, détecter qu'une remorque (29) pousse le véhicule tracteur (19) sans que les freins de service (10) soient actionnés et, lors de l'atteinte ou du dépassement d'une action prédéterminée de poussée exercée par la remorque (29), actionner automatiquement l'installation de freinage de la remorque (29) pour exercer une action de freinage sur la remorque (29) sans que les freins de service (10) du véhicule tracteur (19) soient actionnés, et dans lequel

a) à partir de la différence ou du quotient entre la vitesse effective de rotation du moteur du véhicule tracteur (19) et d'une vitesse de rotation prédéterminée de consigne du moteur et/ou
b) à partir de la différence ou du quotient d'un premier signal de pression et d'un deuxième signal de pression saisis par l'intermédiaire d'un premier détecteur de pression et d'un deuxième détecteur de pression d'un entraînement hydrostatique de roulage du véhicule tracteur (19),

une mesure de l'action de poussée de la remorque (29) et/ou une grandeur caractéristique qui permet de détecter que la remorque (29) exerce une poussée sur le véhicule tracteur (19) sont déterminées.

**11.** Dispositif selon la revendication 10, **caractérisé en ce que** les moyens de sortie (31) présentent une soupape relais d'air comprimé présentant une caractéristique courant-pression essentiellement proportionnelle.

**12.** Dispositif selon la revendication 11, **caractérisé en ce que** la soupape relais (31) est raccordée à une soupape (20) de frein de la remorque (29).

**13.** Dispositif selon au moins l'une des revendications 10 à 12, **caractérisé en ce que** l'appareil de commande (30) présente une unité de mémoire qui conserve les paramètres de réglage de l'actionnement automatique de l'installation de freinage de la remorque (29).

EP 2 269 880 B1

14

CAN-Bus
J1939

Pvorrat

Daten

ESX – C2C

30

39

p$_{hydr}$

Druckluft
Traktor

11

p$_{Traktor}$

Signal

PRV

31

38

p$_{Traktor}$1

M$_{b\,Anh}$

Radbremse

23

M$_{b\,VA}$

M$_{b\,HA}$

Radbremse
VR

Radbremse
HR

13

Bremszylinder

p$_{Anh}$

22

p$_{hydr}$

p$_{hydr}$

m$_{Anh}$

Radbremszylinder

12

Radbremszylinder

Anhänger-
Bremsventil

p$_{Anh}$

ALB- /
Handregler

p$_{Anh}$

Bremszylinder

F$_{Pedal}$

Hauptbremszylinder

p$_{hydr}$

20

21

23

Radbremszylinder

12

Radbremszylinder

Radbremse

10

p$_{hydr}$

p$_{hydr}$

Radbremse
VL

13

Radbremse
HL

M$_{b\,VA}$

M$_{b\,HA}$

M$_{b\,Anh}$

19

Fig. 1

29

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202004006324 U1

- WO 2007008150 A1

**In der Beschreibung aufgeführte Nicht-Patentliteratur**

- **MARCO WIEGANDT.** Grundlagen eines Traktor-bremsmanagements. Shaker-Verlag, 2004